# EUROPEAN PATENT APPLICATION

(11) **EP 4 737 248 A1**
(43) Date of publication of application: **06.05.2026**
(21) Application number: 24209815.0
(22) Date of filing: 30.10.2024
(51) Int. Cl.: B60W 40/068

(54) **METHOD OF CONTROLLING A VEHICLE BASED ON ESTIMATION OF POWER DISSIPATION FROM A TIRE, AND COMPUTER SYSTEM**

(71) Applicant: Volvo Truck Corporation, 405 08 Göteborg (SE)
(72) Inventor: ASKERDAL, Mikael, 439 51 ÅSA (SE); BALIGA, Nikhil, 413 02 GÖTEBORG (SE); AGARWAL, Rohit, 417 23 GÖTEBORG (SE)
(74) Representative: Kransell & Wennborg KB

(57) **Abstract**

A method, comprising: controlling (S41) a vehicle (1) using a first set of control parameters adapted for a first road friction, estimated at a first point in time (t₁); receiving (S42) indications of a first temperature (Ti) of a tire (16) a first time derivative of the temperature (Ṫ₁) of the tire (16); estimating (S43) a first power dissipation measure (P_{out,1}) for the tire (16); receiving (S44) indications of a second temperature (T₂) of the tire (16) and a second time derivative of the temperature (Ṫ₂) of the tire (16); estimating (S45) a second power dissipation measure (P_{out,2}) for the tire (16); detecting (S46) a change in the power dissipation (|P_{out,2}-P_{out,1}|) resulting from a change in road surface conditions; and controlling (S48), in response to the detected change (|P_{out,2}-P_{out,1}|), the vehicle using a second set of control parameters adapted for a second road friction different from the first road friction.

## Description

### TECHNICAL FIELD

The disclosure relates generally to evaluation of a road friction estimation. In particular aspects, the disclosure relates to a method of controlling a vehicle based on estimations of power dissipation from a tire, and to a computer system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Methods exist for estimating an instantaneous road friction. However, road conditions may change, and there may be times when such methods cannot be used, for various reasons.

It would be desirable to enable evaluation of the validity of a previously estimated instantaneous road friction.

### SUMMARY

According to a first aspect of the disclosure, there is provided a computer system comprising processing circuitry configured to: control a vehicle using a first set of control parameters adapted for a first road friction, estimated at a first point in time; receive, within a predefined first time range including the first point in time, an indication of a first temperature of a tire of the vehicle and an indication of a first time derivative of the temperature of the tire; estimate, based on the indication of the first temperature and the indication of the first time derivative of the temperature, a first power dissipation measure indicative of a power dissipation from the tire within the first time range; receive, within a predefined second time range later than the first time range, an indication of a second temperature of the tire of the vehicle and an indication of a second time derivative of the temperature of the tire; estimate, based on the indication of the second temperature and the indication of the second rate of change of the temperature, a second power dissipation measure indicative of the power dissipation from the tire within the second time range; detect, based on the first power dissipation measure and the second power dissipation measure, a change in the power dissipation from the tire resulting from a change in road surface conditions having taken place between the first time range and the second time range; and control, in response to the detected change, the vehicle using a second set of control parameters adapted for a second road friction different from the first road friction. The first aspect of the disclosure may seek to enable evaluation of the validity of a previously estimated instantaneous road friction. This may, in turn, provide for improved control of the vehicle. A technical benefit may include to enable detection of a change in road surface conditions that may render a previously estimated road friction to no longer be valid. Based on such a finding, the control parameters used for controlling operation of the vehicle may be changed. Conversely, it may be beneficial to be able to conclude that the previously estimated instantaneous road friction is still valid, so that the set of control parameters adapted for that road friction may continue to be used. This may allow for continued operation of the vehicle using road friction optimized control parameters for a longer time when the change in the power dissipation from the tire that may result from a change in road surface conditions is determined to be sufficiently small. This may, in turn, provide for vehicle control resulting in improved fuel efficiency and/or reduced particle emissions, as compared to the situations where control parameters adapted for a conservative estimate of the road friction are used. A conservative estimate may be a low road friction, such a lower than the previously estimated first road friction.

The indication of the first temperature of the tire at a time within the first time range and the indication of the second temperature of the tire at a time within the second time range may be indicative of instantaneous temperatures of the vehicle tire. The instantaneous temperatures of the vehicle tire may, for example, be the rubber temperatures measured from an inside of the tire, or temperatures of the gas (typically air) enclosed by the tire, or temperatures of a thread surface on the outside of the tire, or temperatures of a shoulder of the tire, or a combination of one or more of these temperatures. In the context of the present application, "the first time derivative" should be understood to mean the time derivative at a first point in time, and "the second time derivative" should be understood to mean the time derivative at a second point in time. In particular, the expression "the second time derivative" should not be interpreted as having been differentiated twice in respect of time.

A power dissipation from the tire within a time range may be the power dissipation from the tire at a point in time within the time range, or an average power dissipation from the tire for the time range, or for a portion of the time range. The power dissipation measures indicative of the power dissipations from the tire may be measures indicative of magnitudes of the power dissipations from the tire. The power dissipation measures indicative of the power dissipations from the tire may alternatively be measures indicating relations between the magnitudes of the power dissipations and a temperature difference between the temperature of the tire and the temperature of at least one medium with which heat is exchanged. For example, the power dissipation measures may thus be indicative of magnitudes of a heat transfer coefficient, for heat transfer between the tire and the road surface and/or between the tire and the ambient air.

As is, *per se,* well known to one of ordinary skill in the art, there are various techniques for estimating an instantaneous road friction. Examples of such techniques may include to measure and evaluate tire slip, or to use images captured by at least one vehicle-mounted camera, etc. Regardless of how the instantaneous road friction is estimated, it is instantaneous by nature, and cannot be expected to be valid for an extended period of time, without data indicating that significant changes in road friction are unlikely. Examples of the present disclosure may provide such data, in the form of a detected change in the power dissipation from at least one of the tires of the vehicle.

Optionally in some examples, including in at least one preferred example, the processing circuitry may be further configured to: determine, based on the detected change, that the estimation of the first road friction is no longer valid. A technical benefit may include that control parameters adapted for a relatively conservative estimate of the road friction can be used at a time when it has been determined that the estimation of the first road friction is no longer valid. At least in some situations, this may postpone the use of such control parameters adapted for a relatively conservative estimate of the road friction. In other situations, the use of such control parameters may start earlier than would otherwise have been the case, providing for improved, such as safer, operation of the vehicle.

Optionally in some examples, including in at least one preferred example, the processing circuitry may be further configured to: assign the second road friction to a friction being lower than the first road friction. A technical benefit may include that the assigning of the second road friction to a lower road friction may automatically result in control of the vehicle using a second set of control parameters that are adapted for a lower friction, to ensure safe operation of the vehicle.

Optionally in some examples, including in at least one preferred example, the processing circuitry may be further configured to estimate the second road friction based on the first road friction and the detected change. A technical benefit may include that the assigning of the second set of control parameters may be adapted for a lower friction or a higher friction than the first friction, in accordance with the estimation. This may provide for optimized operation of the vehicle, enabling higher efficiency and/or lower emission of particles etc. Estimation of the second road friction based on the first road friction and the detected change may not always be possible. For example, such estimation may be restricted to cases where vehicle conditions can be determined to be mainly unchanged between the first time range and the second time range. For instance, the speed of the vehicle and forces acting on the tires may be substantially unchanged. Moreover, the road surface temperature may be substantially unchanged, and the ambient temperature may be substantially unchanged.

Optionally in some examples, including in at least one preferred example, the processing circuitry may be further configured to: receive, within the first time range, an indication of a first speed of the vehicle; estimate the first power dissipation measure additionally based on the indication of the first speed of the vehicle; receive, within the second time range, an indication of a second speed of the vehicle; and estimate the second power dissipation measure additionally based on the indication of the second speed of the vehicle. A technical benefit may include that a change in power dissipation from the tire resulting from a change in the speed of the vehicle can be identified, which, in turn, provides for a more accurate detection of a change in the power dissipation from the tire resulting from a change in road surface conditions having taken place. This may allow for an improved determination of when to control the vehicle using the second set of control parameters, and also for an improved determination of the second set of control parameters.

The indication of the speed of the vehicle may, for example, be an indication of the longitudinal speed of the vehicle (of the rotational axis around which the vehicle tire rotates), or an indication of the rotational speed of the vehicle tire.

Optionally in some examples, including in at least one preferred example, the processing circuitry may be further configured to: receive, within the first time range, an indication of a first force acting on the tire; estimate the first power dissipation measure additionally based on the indication of the first force acting on the tire; receive, within the second time range, an indication of a second force acting on the tire; and estimate the second power dissipation measure additionally based on the indication of the second force acting on the tire. A technical benefit may include that a change in power dissipation from the tire resulting from a change in the force acting on the tire can be identified, which, in turn, provides for a more accurate detection of a change in the power dissipation from the tire resulting from a change in road surface conditions having taken place. This may allow for an improved determination when to control the vehicle using the second set of control parameters, and also for an improved determination of the second set of control parameters.

It should be noted that an indication of a force acting on the tire may be any indication of at least a dominant force acting on the vehicle tire, from which conclusions regarding the magnitude of the rolling induced deformation of the vehicle tire can be drawn. According to one example, such an indication of the force acting on the tire may be an indication of a total force, i.e. a magnitude of the force vector. However, the magnitude of a dominant force component, or a magnitude of a projection in of the total force vector in a plane may be a sufficiently good indication of the force acting on the tire, depending on the requirements of the application.

Optionally in some examples, including in at least one preferred example, the processing circuitry may be further configured to: receive, within the first time range, an indication of a first road surface temperature and an indication of a first ambient temperature; estimate the first power dissipation measure additionally based on the indication of the first road surface temperature and the indication of the first ambient temperature; receive, within the second time range, an indication of a second road surface temperature and an indication of a second ambient temperature; and estimate the second power dissipation measure additionally based on the indication of the second road surface temperature and the indication of the second ambient temperature A technical benefit may include that a change in power dissipation from the tire resulting from a change in the speed of the vehicle can be identified, which, in turn, provides for a more accurate detection of a change in the power dissipation from the tire resulting from a change in road surface conditions having taken place. This may allow for an improved determination of when to control the vehicle using the second set of control parameters, and also for an improved determination of the second set of control parameters.

Optionally in some examples, including in at least one preferred example, the processing circuitry may be further configured to: estimate the first power dissipation measure as a difference between a first measure indicative of a heat generated in the tire and a first measure indicative of a rate of heating of the tire; and estimate the second power dissipation measure as a difference between a second measure indicative of a heat generated in the tire and a second measure indicative of a rate of heating of the tire. A technical benefit may include that a higher precision in the estimations of the power dissipated by the vehicle tire can be achieved.

To even further improve the precision of the estimations of the power dissipation measures, the estimations may additionally be based on known tire properties and a tire model. The known vehicle tire properties may, for example, include one or several of tire construction type (such as "bias", "belted bias" or "radial"), the so-called "tangent delta" of the rubber material of the tire, and the tire pressure at a given temperature, etc. It should be noted that the tire pressure at a given temperature is an indirect measure of the amount of gas in the tire. An alternative known vehicle tire property may thus be the tire inflation, i.e. the amount of gas (typically air) in the tire. The tire inflation may be estimated from the tire pressure and the temperature. Other known vehicle tire properties may include, for example, geometric properties of the vehicle tire, the heat capacity of the tire material, the tire mass etc.

Additionally, the processing circuitry may be configured to estimate the heat generated in the tire resulting from rolling induced deformation of the vehicle tire based on a predefined vehicle tire model. An example of a suitable predefined vehicle tire model may be the so-called "master-curve" referred to in the article "Truck tire transient rolling resistance and temperature at varying vehicle velocities-Measurements and simulations." Polymer Testing 122 (2023): 108004, by Hyttinen, Jukka, et al. By estimating the vehicle tire heating power resulting from rolling induced deformation of the vehicle tire using a well-established model, such as the so-called "master-curve", and estimating the net heating power for the vehicle tire based on a direct observation of the temperature change rate of the vehicle tire, an accurate estimation of the power dissipated by the vehicle tire can be achieved. It should be noted that the vehicle tire model, such as the "master-curve" may depend on the vehicle tire properties, such as the tire inflation, and may additionally depend on other factors, such as road surface roughness and road surface hardness.

Optionally in some examples, including in at least one preferred example, the processing circuitry may be configured to receive the indication of the first time derivative of the temperature of the tire as a first time sequence of temperature values; and receive the indication of the second time derivative of the temperature of the tire as a second time sequence of temperature values. From a time series of temperature values, time derivatives of the temperature can be estimated.

Optionally in some examples, including in at least one preferred example, the processing circuitry may be configured to: receive the indication of the first temperature of the tire as one temperature value in the first time sequence of temperature values, or as an average of a plurality of temperature values in the first time sequence of temperature values; and receive the indication of the second temperature of the tire as one temperature value in the second time sequence of temperature values, or as an average of a plurality of temperature values in the second time sequence of temperature values.

Each temperature value may be indicative of an instantaneous temperature of the vehicle tire. The instantaneous temperature of the vehicle tire may, for example, be the rubber temperature measured from an inside of the tire, or the temperature of the gas (typically air) enclosed by the tire, or the temperature of a thread surface of the outside of the tire, or the temperature of a shoulder of the tire, or a combination of one or more of these temperatures. Alternatively, the temperature values may comprise more than one time series of temperature values, such as one time series of temperature values of the rubber temperature measured form the inside of the tire and one time series of the temperature of the gas enclosed by the tire, and so on.

Optionally in some examples, including in at least one preferred example, the first time range may be less than 15 minutes. Alternatively, the first time range may be less than 10 minutes. Alternatively, the first time range may be less than 5 minutes. A technical benefit may include that it can be assumed, with a sufficiently high degree of confidence, that the first power dissipation measure is related to the first road friction. With a shorter first time range, the relation between the first power dissipation measure and the first road friction may be more reliable.

The computer system according to examples of the present disclosure may advantageously be included in a vehicle, further comprising at least one vehicle wheel with a tire, and at least one temperature sensor arranged to measure a temperature of the tire.

According to a second aspect of the disclosure, there is provided a computer-implemented method, comprising: controlling a vehicle using a first set of control parameters adapted for a first road friction, estimated at a first point in time; receiving, within a predefined first time range including the first point in time, an indication of a first temperature of a tire of the vehicle and an indication of a first time derivative of the temperature of the tire; estimating, based on the indication of the first temperature and the indication of the first time derivative of the temperature, a first power dissipation measure indicative of a power dissipation from the tire within the first time range; receiving, within a predefined second time range later than the first time range, an indication of a second temperature of the tire of the vehicle and an indication of a second time derivative of the temperature of the tire; estimating, based on the indication of the second temperature and the indication of the second rate of change of the temperature, a second power dissipation measure indicative of the power dissipation from the tire within the second time range; detecting, based on the first power dissipation measure and the second power dissipation measure, a change in the power dissipation from the tire resulting from a change in road surface conditions having taken place between the first time range and the second time range; and controlling, in response to the detected change, the vehicle using a second set of control parameters adapted for a second road friction different from the first road friction. The second aspect of the disclosure may seek to enable evaluation of the validity of a previously estimated instantaneous road friction. This may, in turn, provide for improved control of the vehicle. A technical benefit may include to enable detection of a change in road surface conditions that may render a previously estimated road friction to no longer be valid. Based on such a finding, the control parameters used for controlling operation of the vehicle may be changed. Conversely, it may be beneficial to be able to conclude that the previously estimated instantaneous road friction is still valid, so that the set of control parameters adapted for that road friction may continue to be used. This may allow for continued operation of the vehicle using road friction optimized control parameters for a longer time when the change in the power dissipation from the tire that may result from a change in road surface conditions is determined to be sufficiently small. This may, in turn, provide for vehicle control resulting in improved fuel efficiency and/or reduced particle emissions, as compared to the situations where control parameters adapted for a relatively conservative estimate of the road friction are used.

The indication of the first temperature of the tire at a time within the first time range and the indication of the second temperature of the tire at a time within the second time range may be indicative of instantaneous temperatures of the vehicle tire. The instantaneous temperatures of the vehicle tire may, for example, be the rubber temperatures measured from an inside of the tire, or temperatures of the gas (typically air) enclosed by the tire, or temperatures of a thread surface of the outside of the tire, or temperatures of a shoulder of the tire, or a combination of one or more of these temperatures.

A power dissipation from the tire within a time range may be the power dissipation from the tire at a point in time within the time range, or an average power dissipation from the tire for the time range, or for a portion of the time range.

As is, *per se,* well known to one of ordinary skill in the art, there are various techniques for estimating an instantaneous road friction. Examples of such techniques may include to measure and evaluate tire slip, or to use images captured by at least one vehicle-mounted camera, etc. Regardless how the instantaneous road friction is estimated, it is instantaneous by nature, and cannot be expected to be valid for an extended period of time, without data indicating that significant changes in road friction are unlikely. Examples of the present disclosure may provide such data, in the form of a detected change in the power dissipation from at least one of the tires of the vehicle.

Optionally in some examples, including in at least one preferred example, the method may comprise: determining, based on the detected change, that the estimation of the first road friction is no longer valid. A technical benefit may include that control parameters adapted for a relatively conservative estimate of the road friction can be used at a time when it has been determined that the estimation of the first road friction is no longer valid. At least in some situations, this may postpone the use of such control parameters adapted for a relatively conservative estimate of the road friction.

Optionally in some examples, including in at least one preferred example, the method may comprise: assigning the second road friction to a friction being lower than the first road friction. A technical benefit may include that the assigning of the second road friction to a lower road friction may automatically result in control of the vehicle using a second set of control parameters that are adapted for a lower friction, to ensure safe operation of the vehicle.

Optionally in some examples, including in at least one preferred example, the method may comprise estimating the second road friction based on the first road friction and the detected change. A technical benefit may include that the assigning of the second set of control parameters may be adapted for a lower friction or a higher friction than the first friction, in accordance with the estimation. This may provide for optimized operation of the vehicle, enabling higher efficiency and/or lower emission of particles etc. Estimation of the second road friction based on the first road friction and the detected change may not always be possible. For example, such estimation may be restricted to cases where vehicle conditions can be determined to be mainly unchanged between the first time range and the second time range. For instance, the speed of the vehicle and forces acting on the tires may be substantially unchanged.

Optionally in some examples, including in at least one preferred example, the method may comprise: receiving, within the first time range, an indication of a first speed of the vehicle; estimate the first power dissipation measure additionally based on the indication of the first speed of the vehicle; receive, within the second time range, an indication of a second speed of the vehicle; and estimate the second power dissipation measure additionally based on the indication of the second speed of the vehicle. A technical benefit may include that a change in power dissipation from the tire resulting from a change in the speed of the vehicle can be identified, which, in turn, provides for a more accurate detection of a change in the power dissipation from the tire resulting from a change in road surface conditions having taken place. This may allow for an improved determination when to control the vehicle using the second set of control parameters, and also for an improved determination of the second set of control parameters.

The indication of the speed of the vehicle may, for example, be an indication of the longitudinal speed of the vehicle (of the rotational axis around which the vehicle tire rotates), or an indication of the rotational speed of the vehicle tire.

Optionally in some examples, including in at least one preferred example, the method may comprise: receiving, within the first time range, an indication of a first force acting on the tire; estimate the first power dissipation measure additionally based on the indication of the first force acting on the tire; receive, within the second time range, an indication of a second force acting on the tire; and estimate the second power dissipation measure additionally based on the indication of the second force acting on the tire. A technical benefit may include that a change in power dissipation from the tire resulting from a change in the force acting on the tire can be identified, which, in turn, provides for a more accurate detection of a change in the power dissipation from the tire resulting from a change in road surface conditions having taken place. This may allow for an improved determination when to control the vehicle using the second set of control parameters, and also for an improved determination of the second set of control parameters.

It should be noted that an indication of a force acting on the tire may be any indication of at least a dominant force acting on the vehicle tire, from which conclusions regarding the magnitude of the rolling induced deformation of the vehicle tire can be drawn. According to one example, such an indication of the force acting on the tire may be an indication of a total force, i.e. a magnitude of the force vector. However, the magnitude of a dominant force component, or a magnitude of a projection in of the total force vector in a plane may be a sufficiently good indication of the force acting on the tire, depending on the requirements of the application.

Optionally in some examples, including in at least one preferred example, the method may further comprise: receiving, within the first time range, an indication of a first road surface temperature and an indication of a first ambient temperature; estimating the first power dissipation measure additionally based on the indication of the first road surface temperature and the indication of the first ambient temperature; receiving, within the second time range, an indication of a second road surface temperature and an indication of a second ambient temperature; and estimating the second power dissipation measure additionally based on the indication of the second road surface temperature and the indication of the second ambient temperature A technical benefit may include that a change in power dissipation from the tire resulting from a change in the speed of the vehicle can be identified, which, in turn, provides for a more accurate detection of a change in the power dissipation from the tire resulting from a change in road surface conditions having taken place. This may allow for an improved determination of when to control the vehicle using the second set of control parameters, and also for an improved determination of the second set of control parameters.

Optionally in some examples, including in at least one preferred example, the method may comprise: estimating the first power dissipation measure as a difference between a first measure indicative of a heat generated in the tire and a first measure indicative of a rate of heating of the tire; and estimating the second power dissipation measure as a difference between a second measure indicative of a heat generated in the tire and a second measure indicative of a rate of heating of the tire. A technical benefit may include that a higher precision in the estimations of the power dissipated by the vehicle tire can be achieved.

To even further improve the precision of the estimations of the power dissipation measures, the estimations may additionally be based on known tire properties and a tire model The known vehicle tire properties may, for example, include one or several of tire construction type (such as "bias", "belted bias" or "radial"), the so-called "tangent delta" of the rubber material of the tire, and the tire pressure at a given temperature, etc. It should be noted that the tire pressure at a given temperature is an indirect measure of the amount of gas in the tire. An alternative known vehicle tire property may thus be the tire inflation, i.e. the amount of gas (typically air) in the tire. The tire inflation may be estimated from the tire pressure and the temperature. Other known vehicle tire properties may include, for example, geometric properties of the vehicle tire, the heat capacity of the tire material, the tire mass etc.

Additionally, the method may comprise estimating the heat generated in the tire resulting from rolling induced deformation of the vehicle tire based on a predefined vehicle tire model. An example of a suitable predefined vehicle tire model may be the so-called "master-curve" referred to in the article "Truck tire transient rolling resistance and temperature at varying vehicle velocities-Measurements and simulations." Polymer Testing 122 (2023): 108004, by Hyttinen, Jukka, et al. By estimating the vehicle tire heating power resulting from rolling induced deformation of the vehicle tire using a well-established model, such as the so-called "master-curve", and estimating the net heating power for the vehicle tire based on a direct observation of the temperature change rate of the vehicle tire, an accurate estimation of the power dissipated by the vehicle tire can be achieved. It should be noted that the vehicle tire model, such as the "master-curve" may depend on the vehicle tire properties, such as the tire inflation.

Optionally in some examples, including in at least one preferred example, the method may comprise receiving the indication of the first time derivative of the temperature of the tire as a first time sequence of temperature values; and receiving the indication of the second time derivative of the temperature of the tire as a second time sequence of temperature values. From a time series of temperature values, time derivatives of the temperature can be estimated.

Optionally in some examples, including in at least one preferred example, the method may comprise: receiving the indication of the first temperature of the tire as one temperature value in the first time sequence of temperature values, or as an average of a plurality of temperature values in the first time sequence of temperature values; and receiving the indication of the second temperature of the tire as one temperature value in the second time sequence of temperature values, or as an average of a plurality of temperature values in the second time sequence of temperature values.

Each temperature value may be indicative of an instantaneous temperature of the vehicle tire. The instantaneous temperature of the vehicle tire may, for example, be the rubber temperature measured from an inside of the tire, or the temperature of the gas (typically air) enclosed by the tire, or the temperature of a thread surface of the outside of the tire, or the temperature of a shoulder of the tire, or a combination of one or more of these temperatures. Alternatively, the temperature values may comprise more than one time series of temperature values, such as one time series of temperature values of the rubber temperature measured form the inside of the tire and one time series of the temperature of the gas enclosed by the tire, and so on.

Optionally in some examples, including in at least one preferred example, the first time range may be less than 15 minutes. Alternatively, the first time range may be less than 10 minutes. Alternatively, the first time range may be less than 5 minutes. A technical benefit may include that it can be assumed, with a sufficiently high degree of confidence, that the first power dissipation measure is related to the first road friction. With a shorter first time range, the relation between the first power dissipation measure and the first road friction may be more reliable.

According to a third aspect of the disclosure, there is provided a computer program product comprising program code for performing, when executed by the processing circuitry, the method of the second aspect of the disclosure.

According to a fourth aspect of the disclosure, there is provided a non-transitory computer-readable storage medium comprising instructions, which when executed by the processing circuitry, cause the processing circuitry to perform the method of the second aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is an exemplary computer system according to an example.
**FIG. 3** is an exemplary computer system according to an example.
**FIG. 4** is an exemplary method according to an example.
**FIG. 5** is an exemplary indication of a detected change in the power dissipation from the tire.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

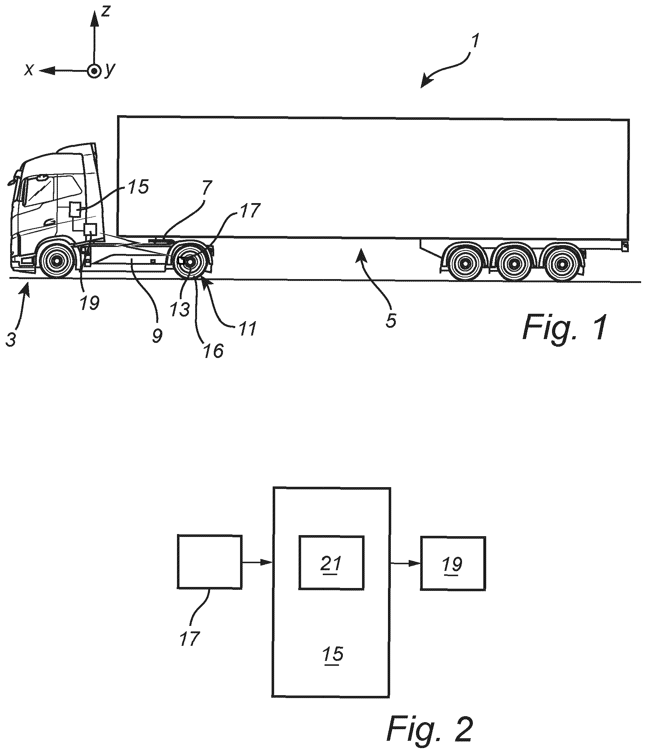

Fig. 1 is an exemplary vehicle 1 according to an example. Referring to Fig. 1, the exemplary vehicle 1 comprises a first vehicle member 3 and a second vehicle member 5 coupled to the first vehicle member 3. In this example vehicle 1, the first vehicle member 3 may, for example, be an electric vehicle, here in the form of a battery electric vehicle BEV tractor, and the second vehicle member 5 may be a semitrailer, coupled to the first vehicle member through a so-called fifth wheel coupling 7. It should be noted that the present disclosure is not limited this example vehicle 1, but applies to many other vehicles, such as vehicles comprising a single vehicle member or vehicles including an internal combustion engine, etc.

Referring again to Fig. 1, the first vehicle member 3 has a battery pack 9 and vehicle wheels 11 arranged to rotate around a rotational axis 13 when the vehicle 1 is in motion. To avoid cluttering the drawings, only one of the vehicle wheels 11 is indicated by a reference numeral in Fig. 1. The vehicle wheel 11 has a tire 16 and at least one tire temperature sensor 17 arranged to measure the temperature of the tire 16. The computer system 15 can receive input wirelessly from the temperature sensor 17, as is schematically indicted by the lightning-shaped arrow in Fig. 1. Any suitable wireless communication protocol may be used, such as Bluetooth^{®}. Further, the first vehicle member 3 comprises a computer system 15, which is configured to control operation of the vehicle 1, by controlling at least one vehicle system 19. In Fig. 1, the at least one vehicle system 19 is represented by a single schematic box. The at least one vehicle system 19 may include the systems needed to control operation of the vehicle 1, such as, for example, a propulsion system of the vehicle 1, a braking system of the vehicle 1, a suspension system of the vehicle 1, etc., using a set of vehicle control parameters. The vehicle control parameters may, in examples, be high level control parameters, such as requested longitudinal forces and lateral forces. In such examples, another computer system of the vehicle 1 may receive the high level control parameters, and determine control commands for various vehicle subsystems for achieving the high level control parameters. In other examples, the vehicle control parameters may be the control commands for various vehicle subsystems.

Fig. 2 is an exemplary computer system 15 according to an example. Referring to Fig. 2, the computer system 15 comprises processing circuitry 21 configured to control operation of the vehicle 1 by providing sets of control parameters to the at least one vehicle system 19. The processing circuitry 21 is further configured to receive, from the at least one tire temperature sensor 17, indications of the temperature of the tire 16 and indications of the time derivative of the temperature of the tire 16, and to estimate power dissipation measures indicative of power dissipation from the tire 16.

In particular, the processing circuitry 21 of the computer system 15 is configured to control the vehicle 1 using a first set of control parameters adapted for a first road friction, estimated at a first point in time ti; receive, within a predefined first time range r₁ including the first point in time t₁, an indication of a first temperature T₁ of the tire 16 of the vehicle 1 and an indication of a first time derivative of the temperature T₁ of the tire 16; estimate, based on the indication of the first temperature T₁ and the indication of the first time derivative of the temperature T₁, a first power dissipation measure P_{out,1} indicative of a power dissipation from the tire 16 within the first time range r₁; receive, within a predefined second time range r₂ later than the first time range r₁, an indication of a second temperature T₂ of the tire 16 of the vehicle 1 and an indication of a second time derivative of the temperature Ṫ₂ of the tire 16; estimate, based on the indication of the second temperature T₂ and the indication of the second rate of change of the temperature Ṫ₂, a second power dissipation measure P_{out,2} indicative of the power dissipation from the tire 16 within the second time range r₂; detect, based on the first power dissipation measure P_{out,1} and the second power dissipation measure P_{out,2}, a change |P_{out,2}-P_{out,1}| in the power dissipation from the tire 16 resulting from a change in road surface conditions having taken place between the first time range r₁ and the second time range r₂; and control, in response to the detected change |P_{out,2}-P_{out,1}|, the vehicle 1 using a second set of control parameters adapted for a second road friction different from the first road friction.

There may be more than one temperature sensor arranged to measure the temperature of the tire 16. One or more temperature sensors 17 may be arranged to measure the tire rubber temperature from inside the tire 16. One or more temperature sensors 17 may be arranged to measure the temperature of the gas - typically air - inside the tire 16. One or more temperature sensors 17 may be arranged outside the tire 16 and arranged and configured to measure the thread surface temperature of the tire 16. One or more temperature sensors 17 may be arranged to measure the shoulder temperature of the tire 16. It may be beneficial to have one temperature sensor arranged to measure one of these temperatures, and one temperature sensor arranged to measure another one of these temperature.

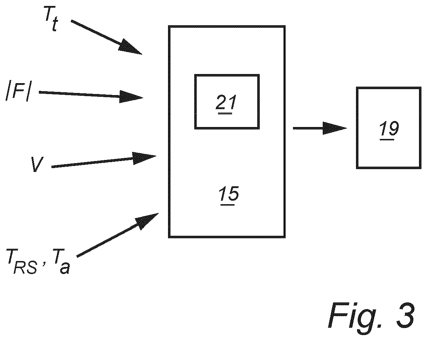

Fig. 3 is an exemplary computer system 15 according to an example. Referring to Fig. 3, the processing circuitry 21 of the computer system 15 may be configured to receive, from the at least one temperature sensor 17, temperature values indicative of temperatures of the vehicle tire 16 at a sequence of times. As is schematically indicated in Fig. 3, the processing circuitry 21 may additionally be configured to receive one or more of a vehicle tire force indication |F|, a vehicle speed indication v, a road surface temperature indication T_{RS}, an ambient temperature indication Tₐ, and tire inflation level. As is also indicated in Fig. 3, the processing circuitry 21 may be configured to estimate power dissipation measures additionally based on the above-mentioned additional received indications.

The vehicle tire force indication |F| is here an indication of a total force, i.e. a magnitude of the force vector. It should, however, be noted that the vehicle tire force indication may be any indication of at least a dominant force acting on the vehicle tire 16 and from which conclusions regarding the magnitude of the rolling induced deformation of the vehicle tire 16 can be drawn. For example, the magnitude of a dominant force component, or a magnitude of a projection in of the total force vector in a plane may be a sufficiently good vehicle tire force indication, depending on the requirements of the application.

The vehicle speed indication v may be an indication of the longitudinal speed of the vehicle 1 of the rotational axis 13 around which the vehicle tire 16 rotates, or an indication of the rotational speed of the vehicle tire 16.

The road surface temperature indication T_{RS}, and the ambient temperature indication Tₐ may be based on measurements by sensors comprised in the vehicle 1, and/or based on data from another vehicle that is, or has recently been, in the same road segment, and/or based on other measurements or estimations.

Generally, more received indications, and indications received from local measurements may provide for a more accurate and/or reliable estimation of the power dissipation measure, which allows for improved detection of a change in the power dissipation from the tire 16 resulting from changes in road surface conditions that take place over time. It should, however, be noted that there may advantages with a simpler model requiring fewer received indications. For instance, the complexity of the vehicle 1 and/or vehicle tire 16 can be kept down, and less computing power may be required to perform the estimation of the cooling parameter set.

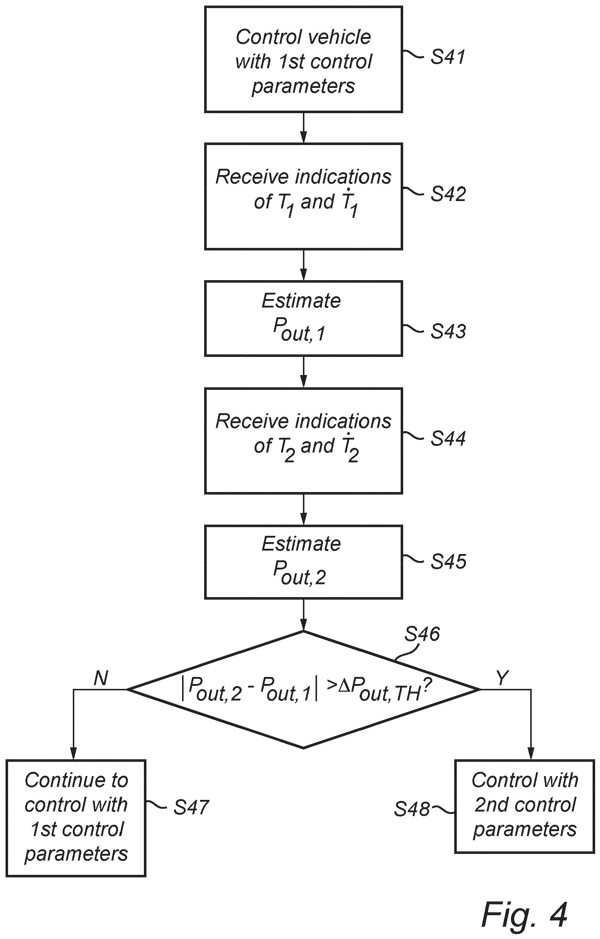

Fig. 4 is an exemplary method according to an example. In the following, an example method will be described with reference to the flow-chart in Fig. 4, and with additional reference to other figures as indicated below.

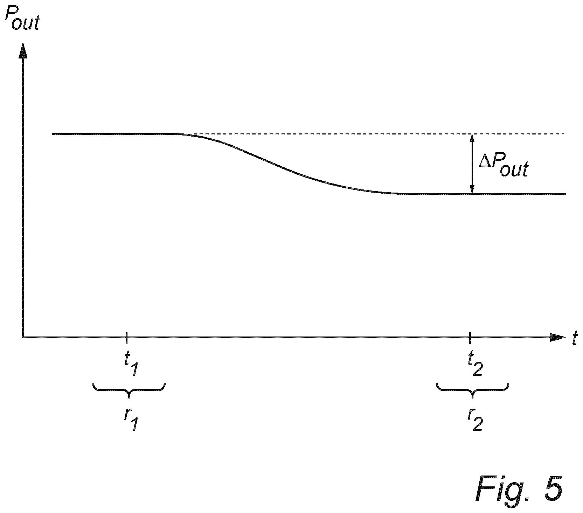

The method comprises controlling S41, by the processing circuitry 21 of the computer system 15 in Fig. 2 or Fig. 3 the vehicle 1 in Fig. 1 using a first set of control parameters adapted for a first road friction, estimated at a first point in time t1. The first point in time t1 is schematically indicated in the diagram in Fig. 5.

Within a predefined first time range r₁, including the first point in time t₁, an indication of a first temperature T₁ of the tire 16 of the vehicle 1 and an indication of a first time derivative of the temperature T₁ of the tire 16 are received S42 by the processing circuitry 21 of the computer system 15. These indications may be received before or after the first point in time t₁, as long as the indications are received within the first time range r₁. As was explained further above, the first time range r₁ is selected to ensure that the first road friction can reliably be assumed to be valid within the first time range r₁.

As was described above with reference to Fig. 3, additional indications may be received within the first time range r₁, including, for example, an indication of a first speed vi of the vehicle 1 and/or an indication of a first force |F₁| acting on the tire 16. One or more of the indications described above with reference to Fig. 3 may increase the usefulness of the friction estimation validation performed based on estimated power dissipation measures. For example, if the vehicle speed is substantially constant for an extended period of time, a reliable friction estimation validation may be performed without receiving indications of the vehicle speed. By receiving, and additionally basing the estimations of the power dissipations measures on indications of the vehicle speed, the friction estimation validation based on estimated power dissipation measures can be extended also to situations where the vehicle speed changes over time, within the evaluation period.

The method then proceeds to estimating S43, based on the indication of the first temperature T₁ and the indication of the first time derivative of the temperature T₁, and optionally additionally based on further indications as described above, a first power dissipation measure P_{out,1} indicative of a power dissipation from the tire 16 within the first time range r₁. This is schematically indicated in Fig. 5, which is a diagram of the power dissipation measure as a function of time. Exemplary times t₁, t₂, and time ranges r₁, r₂ are indicated in Fig. 5.

According to examples, the first power dissipation measure P_{out,1} may be estimated as a difference between a first measure indicative of a heat P_{in,1} generated in the tire 16 and a first measure indicative of a rate of heating P_{net,1} of the tire 16.

The heat generated in the tire 16 may be modeled as a function of the temperature of the tire 16, the vehicle speed, and the tire forces. In examples, use of the method may be limited to situations where the vehicle speed and the tire forces can be considered to be substantially constant over an evaluation time period. The heat generated in the tire 16 can then be considered to be a function of the temperature of the tire 16, and measured changes of the temperature of the tire 16 can be used to estimate changes of the heat generated in the tire 16. In examples where indications of the vehicle speed and/or the tire forces are received, such indications can be used to estimate the heat generated in the tire 16 also for situations where the vehicle speed and/or tire forces change over the evaluation time period.

The rate of heating of the tire 16 can be directly estimated based on the received indication of the rate of change of the temperature of the tire, the tire mass and the heat capacity of the tire 16, as will be evident to one of ordinary skill in the art.

An indication of a second temperature T₂ of the tire 16 of the vehicle 1 and an indication of a second time derivative of the temperature Ṫ₂ of the tire 16 are received S44, within a predefined second time range r₂ later than the first time range r₁. These, and optionally additional, indications may be received repeatedly, such as with a predefined time period between receiving indications. For example, these indications may be received with a time period of about one minute. Receiving the indications more or less often, and/or with a time period that changes over time would also be possible.

The method then proceeds to estimating S45, based on the indication of the second temperature T₂ and the indication of the second time derivative of the temperature Ṫ₂, and optionally additionally based on further indications as described above, a second power dissipation measure P_{out,2} indicative of a power dissipation from the tire 16 within a second time range r₂ later than the first time range r₁. This is schematically indicated in Fig. 5, which is a diagram of the power dissipation measure as a function of time. Exemplary times t₁, t₂, and time ranges r₁, r₂ are indicated in Fig. 5.

According to examples, the second power dissipation measure P_{out,2} may be estimated as a difference between a second measure indicative of a heat P_{in,2} generated in the tire 16 and a second measure indicative of a rate of heating P_{net,2} of the tire 16.

A change in the power dissipation |P_{out,2}-P_{out,1}| from the tire 16 may be evaluated S46, for example by comparing the change in the power dissipation |P_{out,2}-P_{out,1}| from the tire 16 with a predefined threshold change ΔP_{οut,TH.} An exemplary change in the power dissipation from the tire 16 over time is schematically indicated in Fig. 5. This, relatively simple, representation of the change in the power dissipation from the tire 16 resulting from a change in road surface conditions having taken place between the first time range and the second time range may be relevant for the case when most external conditions are unchanged between the first time range and the second time range. If, for example, the speed and tire forces are assumed to be substantially unchanged, but that changes in the road surface temperature and the ambient temperature have been detected, then the change in the power dissipation from the tire 16 resulting from a change in road surface conditions having taken place between the first time range and the second time range could be represented by the expression |P_{out,2}/(2T₂-T_{RS,2}-T_{a,2})-P_{out,1}(2T₁-T_{RS,1}-T_{a,1})|.

When the change is determined to be relatively small such as lower than the threshold change, it may be determined that there has not been a substantial change of the road surface conditions since the road friction estimation resulted in the first road friction, and control S47 of the vehicle 1 can continue to take place using the first set of control parameters adapted for the first road friction.

When the change is determined to be relatively large such as larger than the threshold change, it may be determined that a substantial change has been detected of the road surface conditions since the road friction estimation resulted in the first road friction. In response to this detection, the vehicle 1 is controlled using a second set of control parameters adapted for a second road friction, different from the first road friction.

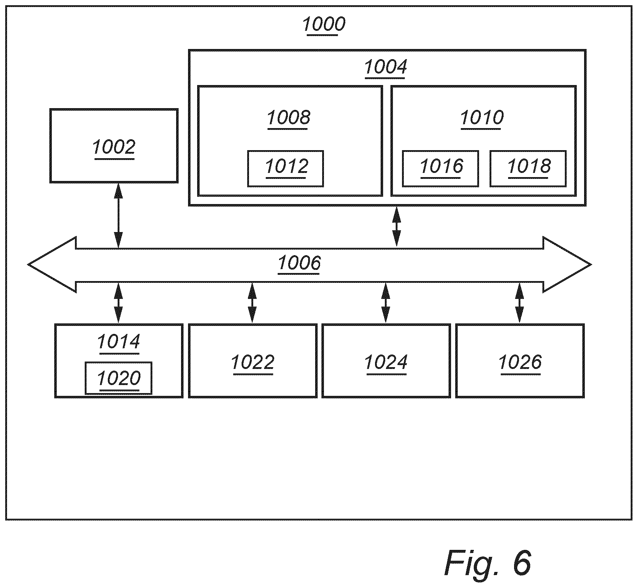

Fig. 6 is a schematic diagram of a computer system 1000 for implementing examples disclosed herein, such as for implementing examples of the computer system 15 according to examples. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet, or by direct wired or wireless communication. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or indication processing or for executing computer code stored in memory 1004. The processing circuitry 1002 may, for example, include a general-purpose processor, an application specific processor, a Digital indication Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to: control a vehicle using a first set of control parameters adapted for a first road friction, estimated at a first point in time; receive, within a predefined first time range including the first point in time, an indication of a first temperature of a tire of the vehicle and an indication of a first time derivative of the temperature of the tire; estimate, based on the indication of the first temperature and the indication of the first time derivative of the temperature, a first power dissipation measure indicative of a power dissipation from the tire within the first time range; receive, within a predefined second time range later than the first time range, an indication of a second temperature of the tire of the vehicle and an indication of a second time derivative of the temperature of the tire; estimate, based on the indication of the second temperature and the indication of the second rate of change of the temperature, a second power dissipation measure indicative of the power dissipation from the tire within the second time range; detect, based on the first power dissipation measure and the second power dissipation measure, a change in the power dissipation from the tire resulting from a change in road surface conditions having taken place between the first time range and the second time range; and control, in response to the detected change, the vehicle using a second set of control parameters adapted for a second road friction different from the first road friction.

Example 2: The computer system of example 1, wherein the processing circuitry is further configured to: determine, based on the detected change, that the estimation of the first road friction is no longer valid.

Example 3: The computer system of example 2, wherein the processing circuitry is further configured to: assign the second road friction to a friction being lower than the first road friction.

Example 4: The computer system of example 2, wherein the processing circuitry is further configured to: estimate the second road friction based on the first road friction and the detected change.

Example 5: The computer system of any of examples 1-4, wherein the processing circuitry is further configured to: receive, within the first time range, an indication of a first speed of the vehicle; estimate the first power dissipation measure additionally based on the indication of the first speed of the vehicle; receive, within the second time range, an indication of a second speed of the vehicle; and estimate the second power dissipation measure additionally based on the indication of the second speed of the vehicle.

Example 6: The computer system of any of examples 1-5, wherein the processing circuitry is further configured to: receive, within the first time range, an indication of a first force acting on the tire; estimate the first power dissipation measure additionally based on the indication of the first force acting on the tire; receive, within the second time range, an indication of a second force acting on the tire; and estimate the second power dissipation measure additionally based on the indication of the second force acting on the tire.

Example 7: The computer system of any of examples 1-6, wherein the processing circuitry is further configured to: receive, within the first time range, an indication of a first road surface temperature and an indication of a first ambient temperature; estimate the first power dissipation measure additionally based on the indication of the first road surface temperature and the indication of the first ambient temperature; receive, within the second time range, an indication of a second road surface temperature and an indication of a second ambient temperature; and estimate the second power dissipation measure additionally based on the indication of the second road surface temperature and the indication of the second ambient temperature.

Example 8: The computer system of any of examples 1-7, wherein the processing circuitry is further configured to: estimate the first power dissipation measure as a difference between a first measure indicative of a heat generated in the tire and a first measure indicative of a rate of heating of the tire; and estimate the second power dissipation measure as a difference between a second measure indicative of a heat generated in the tire and a second measure indicative of a rate of heating of the tire.

Example 9: The computer system of any of examples 1-8, wherein the processing circuitry is configured to: receive the indication of the first time derivative of the temperature of the tire as a first time sequence of temperature values; and receive the indication of the second time derivative of the temperature of the tire as a second time sequence of temperature values.

Example 10: The computer system of example 9, wherein the processing circuitry is configured to: receive the indication of the first temperature of the tire as one temperature value in the first time sequence of temperature values, or as an average of a plurality of temperature values in the first time sequence of temperature values; and receive the indication of the second temperature of the tire as one temperature value in the second time sequence of temperature values, or as an average of a plurality of temperature values in the second time sequence of temperature values.

Example 11: The computer system of any of examples 1-10, wherein the first time range is less than 15 minutes.

Example 12: A vehicle comprising at least one vehicle wheel with a tire, at least one temperature sensor arranged to measure a temperature of the tire, and the computer system of any of examples 1-11.

Example 13: A computer-implemented method, comprising: controlling a vehicle using a first set of control parameters adapted for a first road friction, estimated at a first point in time; receiving, within a predefined first time range including the first point in time, an indication of a first temperature of a tire of the vehicle and an indication of a first time derivative of the temperature of the tire; estimating, based on the indication of the first temperature and the indication of the first time derivative of the temperature, a first power dissipation measure indicative of a power dissipation from the tire within the first time range; receiving, within a predefined second time range later than the first time range, an indication of a second temperature of the tire of the vehicle and an indication of a second time derivative of the temperature of the tire; estimating, based on the indication of the second temperature and the indication of the second rate of change of the temperature, a second power dissipation measure indicative of the power dissipation from the tire within the second time range; detecting, based on the first power dissipation measure and the second power dissipation measure, a change in the power dissipation from the tire resulting from a change in road surface conditions having taken place between the first time range and the second time range; and controlling, in response to the detected change, the vehicle using a second set of control parameters adapted for a second road friction different from the first road friction.

Example 14: The method of example 13, comprising: determining, based on the detected change, that the first friction is no longer valid.

Example 15: The method of example 14, comprising: assigning the second road friction to a friction being lower than the first road friction.

Example 16: The method of example 14, wherein the processing circuitry is further configured to: estimating the second road friction based on the first road friction and the detected change.

Example 17: The method of any of examples 13-16, comprising: receiving, within the first time range, an indication of a first speed of the vehicle; estimating the first power dissipation measure additionally based on the indication of the first speed of the vehicle; receiving, within the second time range, an indication of a second speed of the vehicle; and estimating the second power dissipation measure additionally based on the indication of the second speed of the vehicle.

Example 18: The method of any of examples 13-17, comprising: receiving, within the first time range, an indication of a first force acting on the tire; estimating the first power dissipation measure additionally based on the indication of the first force acting on the tire; receiving, within the second time range, an indication of a second force acting on the tire; and estimating the second power dissipation measure additionally based on the indication of the second force acting on the tire.

Example 19: The method of any of examples 13-18, further comprising: receiving, within the first time range, an indication of a first road surface temperature and an indication of a first ambient temperature; estimating the first power dissipation measure additionally based on the indication of the first road surface temperature and the indication of the first ambient temperature; receiving, within the second time range, an indication of a second road surface temperature and an indication of a second ambient temperature; and estimating the second power dissipation measure additionally based on the indication of the second road surface temperature and the indication of the second ambient temperature.

Example 20: The method of any of examples 13-19, comprising: estimating the first heat dissipation measure as a difference between a first measure indicative of a heat generated in the tire and a first measure indicative of a rate of heating of the tire; and estimating the second heat dissipation measure as a difference between a second measure indicative of a heat generated in the tire and a second measure indicative of a rate of heating of the tire.

Example 21: A computer program product comprising program code for performing, when executed by the processing circuitry comprised in the computer system of any one of examples 1-11, the method of any of examples 13-20.

Example 22. A non-transitory computer-readable storage medium comprising instructions, which when executed by the processing circuitry comprised in the computer system of any one of examples 1-11, cause the processing circuitry to perform the method of any of example 13-20.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (15) comprising processing circuitry (21) configured to:
control a vehicle (1) using a first set of control parameters adapted for a first road friction, estimated at a first point in time (t₁);
receive, within a predefined first time range (r₁) including the first point in time (ti), an indication of a first temperature (T₁) of a tire (16) of the vehicle (1) and an indication of a first time derivative of the temperature (T₁) of the tire (16);
estimate, based on the indication of the first temperature (T₁) and the indication of the first time derivative of the temperature (T₁), a first power dissipation measure (P_{out,1}) indicative of a power dissipation from the tire (16) within the first time range (r₁);
receive, within a predefined second time range (r₂) later than the first time range (r₁), an indication of a second temperature (T₂) of the tire (16) of the vehicle (1) and an indication of a second time derivative of the temperature (T₂) of the tire (16);
estimate, based on the indication of the second temperature (T₂) and the indication of the second rate of change of the temperature (T₂), a second power dissipation measure (P_{out,2}) indicative of the power dissipation from the tire (16) within the second time range (r₂);
detect, based on the first power dissipation measure (P_{out,1}) and the second power dissipation measure (P_{out,2}), a change (|P_{out,2}-P_{out,1}|) in the power dissipation from the tire (16) resulting from a change in road surface conditions having taken place between the first time range (r₁) and the second time range (r₂); and
control, in response to the detected change (|P_{out,2}-P_{out,1}|), the vehicle (1) using a second set of control parameters adapted for a second road friction different from the first road friction.

2. The computer system (15) of claim 1, wherein the processing circuitry (21) is further configured to:
determine, based on the detected change (|P_{out,2}-P_{out,1}|), that the estimation of the first road friction is no longer valid.

3. The computer system (15) of claim 2, wherein the processing circuitry (21) is further configured to:
assign, in response to the determination that the estimation of the first road friction is no longer valid, the second road friction to a friction being lower than the first road friction.

4. The computer system (15) of claim 2, wherein the processing circuitry (21) is further configured to:
estimate the second road friction based on the first road friction and the detected change (|P_{out,2}-P_{out,1}|).

5. The computer system (15) of any of claims 1-4, wherein the processing circuitry (21) is further configured to:
receive, within the first time range (r₁),an indication of a first speed (vi) of the vehicle (1);
estimate the first power dissipation measure (P_{out,1}) additionally based on the indication of the first speed (vi) of the vehicle (1);
receive, within the second time range (r₂), an indication of a second speed (v₂) of the vehicle (1); and
estimate the second power dissipation measure (P_{out,2}) additionally based on the indication of the second speed (v₂) of the vehicle (1).

6. The computer system (15) of any of claims 1-5, wherein the processing circuitry (21) is further configured to:
receive, within the first time range (r₁),an indication of a first force (|F₁|) acting on the tire (16);
estimate the first power dissipation measure (P_{out,1}) additionally based on the indication of the first force (|F₁|) acting on the tire (16);
receive, within the second time range (r₂), an indication of a second force (|F₂|) acting on the tire (16); and
estimate the second power dissipation measure (P_{out,2}) additionally based on the indication of the second force (|F₂|) acting on the tire (16).

7. The computer system (15) of any of claims 1-6, wherein the processing circuitry (21) is further configured to:
receive, within the first time range (r₁),an indication of a first road surface temperature (T_{RS,1}) and an indication of a first ambient temperature (T_{a,1});
estimate the first power dissipation measure (P_{out,1}) additionally based on the indication of the first road surface temperature (T_{RS,1}) and the indication of the first ambient temperature (T_{a,1});
receive, within the second time range (r₂), an indication of a second road surface temperature (T_{RS,2}) and an indication of a second ambient temperature (T_{a,2}); and
estimate the second power dissipation measure (P_{out,2}) additionally based on the indication of the second road surface temperature (T_{RS,2}) and the indication of the second ambient temperature (T_{a,2}).

8. The computer system (15) of any of claims 1-7, wherein the processing circuitry (21) is further configured to:
estimate the first power dissipation measure (P_{out,1}) as a difference between a first measure indicative of a heat (P_{in,1}) generated in the tire (16) and a first measure indicative of a rate of heating (P_{net,1}) of the tire (16); and
estimate the second power dissipation measure (P_{out,2}) as a difference between a second measure indicative of a heat (P_{in,2}) generated in the tire (16) and a second measure indicative of a rate of heating (P_{net,2}) of the tire (16).

9. The computer system (15) of any of claims 1-8, wherein the processing circuitry (21) is configured to:
receive the indication of the first time derivative of the temperature (T₁) of the tire (16) as a first time sequence of temperature values; and
receive the indication of the second time derivative of the temperature (T₂) of the tire (16) as a second time sequence of temperature values.

10. The computer system (15) of claim 9, wherein the processing circuitry (21) is configured to:
receive the indication of the first temperature (T₁) of the tire (16) as one temperature value in the first time sequence of temperature values, or as an average of a plurality of temperature values in the first time sequence of temperature values; and
receive the indication of the second temperature (T₂) of the tire (16) as one temperature value in the second time sequence of temperature values, or as an average of a plurality of temperature values in the second time sequence of temperature values.

11. The computer system (15) of any of claims 1-10, wherein the first time range is less than 15 minutes.

12. A vehicle (1) comprising at least one vehicle wheel (11) with a tire (16), at least one temperature sensor (17) arranged to measure a temperature of the tire (16), and the computer system of any of claims 1-11.

13. A computer-implemented method, comprising:
controlling (S41) a vehicle (1) using a first set of control parameters adapted for a first road friction, estimated at a first point in time (t₁);
receiving (S42), within a predefined first time range (r₁) including the first point in time (t₁), an indication of a first temperature (T₁) of a tire (16) of the vehicle (1) and an indication of a first time derivative of the temperature (T₁) of the tire (16);
estimating (S43), based on the indication of the first temperature (T₁) and the indication of the first time derivative of the temperature (T₁), a first power dissipation measure (P_{out,1}) indicative of a power dissipation from the tire (16) within the first time range (r₁);
receiving (S44), within a predefined second time range (r₂) later than the first time range (r₁),an indication of a second temperature (T₂) of the tire (16) of the vehicle (1) and an indication of a second time derivative of the temperature (T₂) of the tire (16);
estimating (S45), based on the indication of the second temperature (T₂) and the indication of the second rate of change of the temperature (T₂), a second power dissipation measure (P_{out,2}) indicative of the power dissipation from the tire (16) within the second time range (r₂);
detecting (S46), based on the first power dissipation measure (P_{out,1}) and the second power dissipation measure (P_{out,2}), a change in the power dissipation (|P_{out,2-}P_{out,1}|) from the tire (16) resulting from a change in road surface conditions having taken place between the first time range (r₁) and the second time range (r₂); and
controlling (S48), in response to the detected change (|P_{out,2}-P_{out,1}|), the vehicle (1) using a second set of control parameters adapted for a second road friction different from the first road friction.

14. The method of claim 13, comprising:
determining, based on the detected change (|P_{out,2}-P_{out,1}|), that the first friction is no longer valid.

15. A computer program product comprising program code for performing, when executed by the processing circuitry (21) comprised in the computer system (15) of any one of claims 1-11, the method of claim 13-14.
